# EUROPÄISCHE PATENTSCHRIFT

(11) **EP 3 826 900 B1**
(45) Veröffentlichungstag und Bekanntmachung des Hinweises auf die Patenterteilung: **04.01.2023**
(21) Anmeldenummer: 19745581.9
(22) Anmeldetag: 22.07.2019
(51) Int. Cl.: B62D 1/181, B62D 1/19

(54) **GETRIEBERAD FÜR EINEN VERSTELLANTRIEB, VERSTELLANTRIEB FÜR EINE LENKSÄULE UND LENKSÄULE FÜR EIN KRAFTFAHRZEUG**
GEAR WHEEL OF AN ADJUSTMENT DRIVE MECHANISM FOR A STEERING COLUMN AND STEERING COLUMN FOR A MOTOR VEHICLE
ROUE DE TRANSMISSION POUR ENTRAÎNEMENT DE RÉGLAGE, ENTRAÎNEMENT DE RÉGLAGE POUR COLONNE DE DIRECTION ET COLONNE DE DIRECTION POUR VÉHICULE À MOTEUR

(30) Priorität: 23.07.2018 DE 102018212202
(43) Veröffentlichungstag der Anmeldung: 02.06.2021
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH); SCHACHT, Arne, 6800 Feldkirch (AT)
(74) Vertreter: thyssenkrupp Intellectual Property GmbH
(86) Internationale Anmeldenummer: PCT/EP2019/069701
(87) Internationale Veröffentlichungsnummer: WO 2020/020835

(56) Entgegenhaltungen:
- EP-A1- 0 315 823
- DE-A1-102010 001 844
- DE-A1-102012 200 834
- DE-A1-102015 215 428
- US-A- 4 967 618

## Beschreibung

### Stand der Technik

Die Erfindung betrifft ein Getrieberad für einen Verstellantrieb, welches einen Zahnkranz aufweist, der außen koaxial umlaufend an einem Kernelement angebracht ist, welches eine axiale Durchgangsöffnung aufweist, in der ein Gewindeelement angebracht ist, das aus einem Kunststoff als Kunststoff-Spritzgussteil ausgebildet ist und das ein axial durchgehendes Innengewinde mit mindestens einem schraubenförmig umlaufenden Gewindezahn aufweist. Ein Verstellantrieb mit einem Getrieberad, und eine einen Verstellantrieb aufweisende Lenksäule für ein Kraftfahrzeug sind ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einem Mantelrohr einer Stelleinheit drehbar gelagert, die von einer Trageinheit an der Fahrzeugkarosserie gehalten ist. Dadurch, dass die Stelleinheit zumindest ein Mantelrohr aufweist, welches in einer mit der Trageinheit verbundenen Manteleinheit, auch als Führungskasten oder Kastenschwinge bezeichnet, in Richtung der Längsachse teleskopartig verschiebbar ist, kann eine Längsverstellung des Lenkrads relativ zur Karosserie erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Bei motorisch verstellbaren Lenksäulen ist es bekannt, zur Verstellung einen motorischen Verstellantrieb mit einer Antriebseinheit vorzusehen, die einen elektrischen Antriebsmotor umfasst, der einen Spindeltrieb mit einer in ein Innengewinde einer Spindelmutter eingeschraubten Gewindespindel antreibt. Durch die Antriebseinheit sind die Gewindespindel und die Spindelmutter gegeneinander um die Gewindespindelachse, oder kurz Spindelachse, drehend antreibbar, wodurch die Gewindespindel und die Spindelmutter je nach Drehrichtung in Richtung der Gewindespindelachse translatorisch aufeinander zu oder voneinander weg bewegt werden können. Die Gewindespindel und die Spindelmutter sind an relativ zueinander verstellbaren Teilen der Lenksäule, beispielsweise an einer Manteleinheit und einer Trageinheit, oder an in Achsrichtung teleskopierbaren Mantelrohren einer Manteleinheit, in Richtung der Spindelachse abgestützt.

Der Antrieb des Spindeltriebs erfolgt von der Antriebseinheit über ein um seine Achse, die identisch mit der Gewindespindelachse ist, drehend antreibbares Getrieberad, welches drehschlüssig mit der Spindelmutter gekuppelt ist. In der gattungsgemäß zugrunde gelegten Bauform ist das Innengewinde der Spindelmutter in dem Getrieberad integriert.

Ein gattungsgemäßes Getrieberad weist ein Kernelement auf, welches außen einen Zahnkranz trägt, und bildet beispielsweise ein Schneckenrad mit einer Verzahnung, in die eine von einem Antriebsmotor antreibbare Schnecke zur Bildung eines Untersetzungsgetriebes eingreift. Das Innengewinde kann in dem Kernelement ausgebildet sein, wie beispielsweise in der US 4,967,618 beschrieben. Alternativ ist es bekannt, dass ein aus Metall bestehendes Kernelement außen den Zahnkranz und innen eine axiale Durchgangsöffnung aufweist, in die als Gewindeelement eine Gewindebuchse eingesetzt ist, wie beispielsweise aus der DE 38 86 900 T2 bekannt. Nachteilig daran ist, dass dieses bekannte Gewindeelement als eigenes Bauteil zunächst separat gefertigt, und anschließend mit dem Kernelement zusammengefügt und fixiert werden muss. Die erforderliche maßgenaue Passung bedingt einen entsprechend hohen Fertigungsaufwand. Durch die Montage in dem Kernelement, bei der eine Verformung oder Fehlausrichtung des Gewindeelements möglichst vermieden werden muss, und die stoff- und/oder formschlüssige Fixierung entsteht ein zusätzlicher Montageaufwand. Durch die Fügestelle kann zudem die Belastbarkeit und Haltbarkeit des Getrieberads beeinträchtigt werden.

Aus der DE 10 2012 200 834 A1 ist ein Getrieberad der eingangs genannten Art bekannt. Um im Crashfall eine ausreichend hohe Belastbarkeit gewährleisten zu können, ist jedoch ein hoher Aufwand erforderlich. Dasselbe gilt für das aus der DE 10 2010 001 844 A1 bekannte Getrieberad.

Angesichts der vorangehend erläuterten Problematik ist es eine Aufgabe der vorliegenden Erfindung, ein verbessertes Getrieberad zur Verfügung zu stellen, welches einen geringeren Fertigungs- und Montageaufwand erfordert, und eine höhere Belastbarkeit und Haltbarkeit hat.

### Darstellung der Erfindung

Diese Aufgabe wird erfindungsgemäß gelöst durch ein Getrieberad mit den Merkmalen des Anspruchs 1, sowie durch einen Verstellantrieb gemäß Anspruch 9 und eine Lenksäule gemäß Anspruch 10. Vorteilhafte Weiterbildungen ergeben sich aus den Unteransprüchen.

Die verwendeten Begriffe zur Bezeichnung des Innengewindes folgen DIN 2244. Insbesondere ist mit dem Gewindezahn der von zueinander geneigten Schraubenflächen begrenzte werkstofferfüllte Teil des Gewindes gemeint, und mit der Gewindelücke bzw. Gewindenut der von zueinander geneigten Schraubenflächen begrenzte werkstofffreie Teil des Gewindes.

Erfindungsgemäß ist bei einem gattungsgemäßen Getrieberad das Gewindeelement aus einem Kunststoff als Kunststoff-Spritzgussteil ausgebildet, welches an einer Innenwandung der Durchgangsöffnung an das Kernelement angespritzt ist.

Durch das Anspritzen im Kunststoff-Spritzgießverfahren ist es möglich, in einem Fertigungsschritt eines integrierten Herstellungsverfahrens das Gewindeelement einschließlich des Innengewindes maßgenau zu formen und gleichzeitig eine besonders haltbare, stoff- und gegebenenfalls formschlüssige Fügeverbindung mit dem Kernelement zu erzeugen. Dadurch wird der Fertigungs- und Montageaufwand gegenüber dem Stand der Technik reduziert, und gleichzeitig kann die Haltbarkeit und Belastbarkeit erhöht werden.

Erfindungsgemäß besteht das Kernelement aus einem metallischen Werkstoff, beispielsweise aus Stahl.

Erfindungsgemäß wird das Gewindeelement in das Kernelement eingespritzt. Hierzu wird das Kernelement bereitgestellt und in einer Spritzgussform einer Kunststoff-Spritzgießmaschine positioniert. Der schmelzflüssige Kunststoff wird in einen Formhohlraum zwischen einem Gewinde-Kern der Spritzgussform und der Innenwandung der Durchgangsöffnung eingespritzt. Dadurch wird eine stoffschlüssige Verbindung des Kunststoffs mit der Innenwandung erzeugt. Nach dem Erstarren des Kunststoffs wird der Gewinde-Kern entformt, und das Innengewinde des aus dem Kunststoff gebildeten Gewindeelements ist exakt koaxial im Kernelement positioniert und orientiert. Die weiteren im Stand der Technik erforderlichen Fertigungs- und Montageschritte können entfallen. Dadurch wird der Fertigungs- und Montageaufwand reduziert.

Es können zusätzlich Oberflächenstrukturierungen, Erhebungen, Vertiefungen oder dergleichen Formschlusselemente in der Innenwandung ausgebildet sein, so dass zusätzlich eine unlösbare formschlüssige Verbindung zwischen dem Kunststoff des Gewindeelements und dem Kernelement erzeugt wird. Es kann beispielsweise auch eine gezielte Aufrauhung der Oberfläche von Bereichen der Innenwandung erfolgen, um die Haftwirkung zu optimieren. Erfindungsgemäß ist vorgesehen, dass in der Durchgangsöffnung ein Crashabstützungsabschnitt ausgebildet ist, in dem mindestens ein Stützelement von dem Kernelement in einen Gewindezahn vorsteht. Das Stützelement ist bevorzugt einstückig mit dem Kernelement ausgebildet, welches aus einem mechanisch beanspruchbaren Material, bevorzugt aus Stahl besteht. Der zumindest eine umlaufende Gewindezahn des Innengewindes ist dadurch zumindest teilweise durch das Kernelement gebildet. Das Stützelement bildet gewissermaßen einen Gewindezahn-Kern. Anders ausgedrückt weist das Kernelement in dem Crashabstützungsabschnitt einen Teil des Innengewindes auf, der zumindest teilweise - bevorzugt an den Gewindeflanken - mit dem Kunststoff überzogen oder von dem Kunststoff umschlossen ist. Dadurch ist das Gewindeelement im Bereich des Gewindes bezüglich einer Beanspruchung in axialer Richtung über das Stützelement formschlüssig an dem Kernelement abgestützt.

Es ist vorteilhaft, dass die Durchgangsöffnung mindestens einen glatten, zylindrischen Positionierabschnitt aufweist. Der Positionierabschnitt, auch als Bewegungsbereich bezeichnet, erstreckt sich über einen axialen Teilabschnitt der Durchgangsöffnung. Die Innenwandung ist dort als glatter, koaxialer Innenzylinder ausgebildet. Der konstante Innendurchmesser im Positionierabschnitt ist größer als der Außendurchmesser des Innengewindes. Dadurch ist die radial zwischen dem Durchmesser des Innengewindes und der Innenwandung gemessene Wandungsstärke des Gewindeelements in Umfangsrichtung und über die Länge des Positionierabschnitts konstant. Durch die glatte Innenwandung wird sichergestellt, dass im Spritzgussprozess beim Abkühlen kein unregelmäßiger Einfall des Kunststoff-Spritzgussteils auftritt, wodurch das Innengewinde des Gewindeelements im Bereich des Positionierabschnitts maßhaltig ausgeformt wird. Außerdem werden potentiell schädliche Spannungen durch Schwund beim Erstarren weitgehend vermieden.

Es kann vorgesehen sein, dass in der Durchgangsöffnung ein hinterschnittener Verbindungsabschnitt ausgebildet ist. Ein derartiger Verbindungsabschnitt kann beispielsweise in Form einer radial von innen in die Durchgangsöffnung eingeformten, zumindest teilweise umlaufenden nutförmigen Vertiefung ausgebildet sein. Dadurch, dass der Innendurchmesser in dem Verbindungabschnitt größer ist als in den übrigen Abschnitten, insbesondere dem Positionierabschnitt, wird durch das in den Verbindungsabschnitt eingespritzte Kunststoffmaterial ein in axialer Richtung wirksames Formschlusselement zwischen Kernelement und Gewindeelement ausgebildet. Dieses sorgt dafür, dass nach dem Erstarren des Kunststoffs das Gewindeelement stoff- und formschlüssig in der Durchgangsöffnung fixiert und mit dem Kernelement verbunden ist. Bevorzugt kann der Verbindungsabschnitt ebenfalls eine glatte zylindrische Innenwandung aufweisen, wodurch potentiell schädliche Verformungen oder Spannungen durch Einfall oder Verzug beim Erstarren weitgehend vermieden werden können.

Bevorzugt ist ein Verbindungsabschnitt mit Abstand zur Stirnseite des Kernelements angeordnet, und grenzt über eine umlaufende, radial nach innen vorspringende Stufe an einen Positionierabschnitt.

In einem montierten Verstellantrieb steht das Kernelement mit einem Stützelement innerhalb des Gewindezahns bis in die schraubenförmig umlaufende Gewindelücke einer eingeschraubten Gewindespindel vor. Wird im Crashfall, d.h. bei einer Fahrzeugkollision, beispielsweise durch einen auf das Lenkrad aufprallenden Körper, eine extrem hohe axiale Kraft auf den Verstellantrieb ausgeübt, wirkt diese sogenannte Crashkraft axial in Richtung der Gewindespindel-Achse zwischen dem Innengewinde und der Gewindespindel. Die Gewindezähne von Innen- und Außengewinde werden entsprechend hoch auf Scherung beansprucht. Dabei wird die auf den Kunststoff-Gewindezahn des Gewindeelements wirkende Belastung formschlüssig über das Stützelement des Crashabstützungsabschnitts abgefangen und über das Kernelement auf die Manteleinheit übertragen. Das Stützelement bildet ein Armierungs- oder Verstärkungselement, welches ein Abscheren des Gewindezahns und damit ein Durchrutschen der Gewindespindel durch das Innengewinde im Crashfall verhindert.

Ein Stützelement kann sich von dem Kernelement bis in die Gewindespitze des Gewindezahns am Innendurchmesser des Innengewindes erstrecken, und an den Gewindeflanken mit Kunststoff umspritzt sein. Dadurch ist ein tiefer Formschlusseingriff in das Außengewinde einer eingeschraubten Gewindespindel möglich, wodurch eine hohe Stützwirkung in axialer Richtung erreicht wird. Zumindest die Gewindeflanken sind mit der Kunststoffoberfläche der Kunststoff-Umspritzung mit den Außengewindeflanken der üblicherweise aus einem metallischen Werkstoff, bevorzugt Stahl, gefertigten Gewindespindel in Kontakt, wodurch eine leichtgängige und reibungsarme Verstellung gewährleistet ist.

Der Crashabstützungsabschnitt kann in einem Endbereich der Durchgangsöffnung angeordnet sein, und der Positionierabschnitt in dem anderen, dazu entgegengesetzten Endbereich. Dadurch wird eine räumliche und funktionale Trennung dargestellt.

Es kann vorgesehen sein, dass zumindest in einem Teil des Crashabstützungsabschnitts das Innengewinde einen vergrößerten Kerndurchmesser aufweist. Durch das zumindest teilweise bis in den Gewindezahn vorstehende Stützelement hat dort das Gewindeelement durch die höhere Festigkeit des Kernelements eine geringere elastische Verformbarkeit als in einem Bereich, in dem zumindest der Gewindezahn und ein diesen tragender Umfangsbereich durchgehend aus Kunststoff ausgebildet sind. Beispielsweise hat das Innengewinde in einem oben beschriebenen Positionierabschnitt und/oder einem Verbindungsabschnitt eine größere radiale Elastizität. Dadurch kann das Gewinde dort spielarm oder spielfrei auf das Außengewinde der Gewindespindel aufgeschraubt sein, wodurch ein spielfreier und dennoch leichtgängiger Lauf des Verstellantriebs realisiert werden kann. Im Bereich des Crashabstützungsabschnitts ist das Gewinde durch das Stützelement in sich starrer, so dass es weniger nachgiebig ist, und unter wechselnden Betriebsbedingungen, beispielsweise bei Temperaturschwankungen, schwergängiger werden könnte. Dies wird durch einen vergrößerten Kerndurchmesser des Innengewindes, der zu einem größeren Gewindespiel führt, wirksam vermieden.

Das Kernelement kann bevorzugt aus einem Werkstoff mit hoher Festigkeit gefertigt werden, die zumindest höher ist als die Festigkeit des Kunststoffes des Gewindeelements. Erfindungsgemäß besteht das Kernelement aus einem metallischen Werkstoff, beispielsweise aus Stahl, und das Gewindeelement aus einem thermoplastischen, im Spritzguss verarbeitbaren Kunststoff, beispielsweise aus Polypropylen (PP), Polyoxymethylen (POM) oder dergleichen.

Der Zahnkranz kann aus einem Kunststoff als Kunststoff-Spritzgussteil außen an dem Kernelement angespritzt sein. Dadurch kann ebenfalls im Kunststoff-Spritzgussverfahren eine stoffschlüssige und/oder formschlüssige Verzahnung, beispielsweise eine Schneckenverzahnung, ausgebildet und im selben Fertigungsschritt mit dem Kernelement verbunden werden. Im Verbindungsbereich mit dem Zahnkranz können zusätzlich Oberflächenstrukturierungen, Erhebungen, Vertiefungen, Vorsprünge oder dergleichen Formschlusselemente an dem Kernelement ausgebildet sein, die in den Kunststoff des Zahnkranzes eingebettet sind, so dass zusätzlich eine unlösbare formschlüssige Verbindung mit dem Kernelement erzeugt wird. Es kann beispielsweise auch eine gezielte Aufrauhung der Oberfläche am Außenumfang des Kernelements erfolgen, um die Haftwirkung zu optimieren.

Das eingesetzte thermoplastische Kunststoff-Material kann an die im Betrieb zu erwartenden Beanspruchungen des Gewindeelements und des Zahnkranzes individuell angepasst werden. So können bei Bedarf unterschiedliche Kunststoffe mit unterschiedlichen Materialeigenschaften eingesetzt werden. Alternativ ist es denkbar, dasselbe Kunststoffmaterial zu verwenden, um eine rationellere Fertigung zu ermöglichen.

Es kann vorgesehen sein, dass das Kernelement eingeformte Lagerringe aufweist. Die Lagerringe bilden axial beidseitig an dem Getrieberad angeordnete axiale Lagerflächen, die bevorzugt Laufbahnen für Wälzkörper aufweisen, beispielsweise Kugellaufbahnen von Kugellagern. Zwischen diesen Kugellaufbahnen und korrespondierenden Kugellaufbahnen in dazu axial oder schräg gegenüberliegenden, im Getriebegehäuse der Antriebseinheit feststehenden Außenlagerflächen sind Wälzkörper angeordnet. Dadurch wird eine Lageranordnung gebildet, in der das Getrieberad in axialer Richtung abgestützt zwischen zwei Drucklagern gelagert ist, die jeweils aus einer Lagerfläche, einer Außenlagerfläche und den dazwischen angeordneten Wälzkörpern gebildet werden. Vorteilhaft ist dabei insbesondere, dass die hohen im Crashfall auftretenden Kräfte vom Crashabstützungsabschnitt über das Kernelement und die Lagerflächen zuverlässig übertragen werden. Außerdem ist eine rationelle Fertigung ermöglicht, und eine hohe Betriebssicherheit und Funktionalität gegeben.

Bei einem Verstellantrieb für eine motorisch verstellbare Lenksäule für ein Kraftfahrzeug, umfassend ein Getrieberad, eine in ein Innengewinde des Getrieberades eingreifende Gewindespindel und eine Antriebseinheit, von der das Getrieberad relativ zur Gewindespindel drehend antreibbar ist, kann vorgesehen sein, dass das Getrieberad gemäß der vorangehend beschriebenen erfindungsgemäßen Ausführungsformen ausgebildet ist. Die Antriebseinheit weist beispielsweise ein mit dem Zahnkranz kämmendes Getriebeelement auf, beispielsweise eine Schnecke. Der Einsatz eines erfindungsgemäßen Getrieberads ermöglicht eine rationellere Fertigung, und bietet eine erhöhte Betriebssicherheit, insbesondere auch unter hoher Beanspruchung und im Crashfall.

Es ist vorteilhaft, dass bei einer motorisch verstellbaren Lenksäule für ein Kraftfahrzeug, umfassend einen Verstellantrieb, der zwischen einer mit der Karosserie verbindbaren Trageinheit und einer eine Lenkspindel drehbar aufnehmenden Manteleinheit und/oder zwischen axial relativ zueinander teleskopartig verstellbaren, die Lenkspindel lagernden Mantelrohren einer Manteleinheit angeordnet ist, der Verstellantrieb wie vorangehend beschrieben mit einem erfindungsgemäßen Getrieberad ausgebildet ist. Dadurch wird eine rationellere Fertigung ermöglicht, und erhöhte Betriebssicherheit, insbesondere auch unter hoher Beanspruchung und im Crashfall.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung einer Lenksäule mit einer motorischen Verstellung,
- Figur 2: einen Verstellantrieb der Lenksäule gemäß Figur 1 in auseinander gezogener Darstellung,
- Figur 3: eine Anordnung eines erfindungsgemäßen Getrieberads in einem Verstellantrieb mit eingreifender Gewindespindel in perspektivischer Ansicht,
- Figur 4: die Anordnung gemäß Figur 3 mit aufgeschnitten dargestelltem Getrieberad,
- Figur 5: einen Längsschnitt durch eine Anordnung gemäß Figur 3 oder 4,
- Figur 6: eine schematische Explosionsdarstellung der Anordnung gemäß Figur 3, 4 oder 5,
- Figur 7: eine weitere schematische Explosionsdarstellung der Anordnung gemäß Figur 3, 4, 5, 6 ohne Zahnkranz,
- Figur 8: ein Längsschnitt durch eine Lageranordnung eines Verstellantriebs gemäß Figur 1 oder 2,
- Figur 9: eine vergrößerte Detailansicht aus Figur 5.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

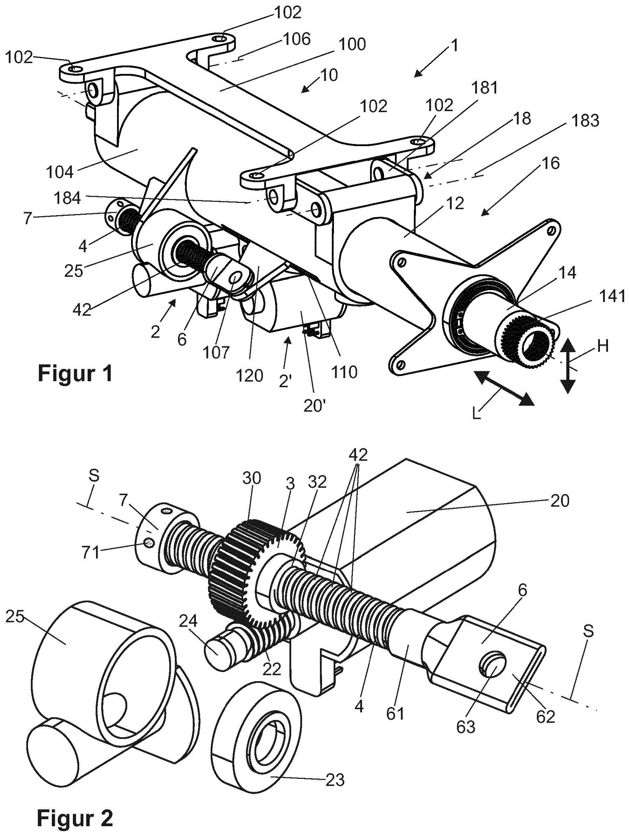

Figur 1 zeigt eine Lenksäule 1, welche eine mit der Karosserie eines hier nicht gezeigten Kraftfahrzeugs verbindbare Trageinheit 10 aufweist, an welcher eine Stelleinheit 16 verstellbar gehalten ist, und zwar in Längsrichtung L und in Höhenrichtung H, wie mit den Doppelpfeilen angedeutet ist. Die Trageinheit 10 umfasst eine Konsole 100, welche am Chassis des Kraftfahrzeugs, beispielsweise über Befestigungsbohrungen 102, befestigt werden kann.

Die Stelleinheit 16 umfasst ein Mantelrohr 12, in welchem eine Lenkspindel 14 drehbar gelagert ist. Am lenkradseitigen Ende 141 der Lenkspindel 14 kann ein hier nicht gezeigtes Lenkrad befestigt werden. Die Lenkspindel 14 dient dazu, ein von einem Fahrer über das Lenkrad auf die Lenkspindel 14 eingebrachtes Lenkmoment in bekannter Weise auf ein hier nicht gezeigtes lenkbares Rad zu übertragen. Die Lenkspindel 14 kann dabei die Lenkbewegung von dem Lenkrad auf das lenkbare Rad unter Zwischenschaltung eines Lenkgetriebes, gegebenenfalls unter Zuhilfenahme einer Hilfskraftunterstützung, übertragen.

In einer Variante kann die Lenkbewegung von der Lenkspindel 14 auch sensorisch, beispielsweise elektrisch, elektronisch oder magnetisch, abgetastet werden und in eine Steuerung eingespeist werden, welche unter Zuhilfenahme einer Lenkeinrichtung eine Verschwenkung des lenkbaren Rades zur Darstellung der Lenkbewegung ausführt. Derartige Systeme sind als Steer-by-wire-Lenksysteme bekannt.

Das Mantelrohr 12 ist in einer Manteleinheit 104 in Längsrichtung L, das ist die Längsverstellrichtung, verschiebbar gehalten, wobei sich die Längsrichtung L in Achsrichtung der Lenkspindel 14 erstreckt. Durch eine Verstellung des Mantelrohrs 12 gegenüber der Manteleinheit 104 kann entsprechend eine Längsverstellung der Lenkspindel 14 und damit des nicht dargestellten Lenkrades zur Anpassung der Position des Lenkrades an die Sitzposition eines Fahrers des Kraftfahrzeugs erreicht werden.

Die Manteleinheit 104 ist verschwenkbar an einer Konsole 100 befestigt und kann um eine Schwenkachse 106 gegenüber der Konsole 100 verschwenkt werden. Eine Verstellbarkeit der Stelleinheit 16 in einer Höhenrichtung H, das ist die Höhenverstellrichtung, die im Wesentlichen senkrecht zur Längsrichtung L orientiert ist, wird darüber ermöglicht, dass das Mantelrohr 12 über einen Verschwenkmechanismus 18 an der Konsole 100 gehalten ist. Damit ergibt sich eine Verschwenkbarkeit des Mantelrohrs 12 und der Lenkspindel 14 gegenüber der Trageinheit 10 und insbesondere gegenüber der Konsole 100 um die Schwenkachse 106 derart, dass auch eine Höhenverstellung des hier nicht gezeigten und an der Lenkspindel 14 angeordneten Lenkrades erreicht wird, um auch auf diese Weise eine Anpassung der Position des Lenkrades an die Sitzposition des Fahrers zu erreichen.

Im Ausführungsbeispiel ist für jede der beiden Verstellrichtungen ein separater Verstellantrieb 2, 2' vorgesehen, mit jeweils einem separaten Spindeltrieb, umfassend eine Gewindespindel 4, 4', sowie ein Getrieberad 3.

Ein Verstellantrieb 2 ist vorgesehen, durch den die Stelleinheit 16 gegenüber der Trageinheit 10 in Längsrichtung L verstellt werden kann. Der Verstellantrieb 2 umfasst eine Gewindespindel 4, die ein Außengewinde 42 aufweist und über ein Befestigungselement 107, das als Gelenkbolzen ausgebildet ist, mit dem Anlenkhebel 120 verbunden, welcher mit dem Mantelrohr 12 verbunden ist. Der Anlenkhebel 120 ist in einem Schlitz 110 in der Manteleinheit 104 so verschiebbar geführt, dass eine Verschiebung des Anlenkhebels 120 gegenüber der Manteleinheit 104 zu einer Verschiebung der Stelleinheit 16 gegenüber der Trageinheit 10 in Längsrichtung L führt.

Die Gewindespindel 4 ist über ein Koppelelement 6, das als Gelenkkopf 43 ausgebildet ist, an dem Anlenkhebel 120 gehalten und erstreckt sich mit ihrer Spindelachse S in Längsrichtung L. Die Gewindespindel 4 greift mit ihrem Außengewinde 42 in ein Innengewinde 32 eines Getrieberads 3 ein, d.h. ist darin eingeschraubt. Das Getrieberad 3 ist drehbar, aber in Längsrichtung L ortsfest bezüglich der Manteleinheit 104 in einem Getriebegehäuse 25 gelagert, so dass eine Drehung des Getrieberads 3 zu einer Axialbewegung der Gewindespindel 4 relativ zum Getrieberad 3 in Richtung der Spindelachse S führt. Mit anderen Worten findet durch eine Drehung des Getrieberads 3 eine Relativbewegung zwischen Mantelrohr 12 und Manteleinheit 104 derart statt, dass eine Verstellung der Position der Stelleinheit 16 gegenüber der Trageinheit 10 bewirkt wird.

Der Verstellantrieb 2 umfasst weiterhin einen Antriebsmotor 20, auf dessen Abtriebswelle 24 eine Schnecke 22 angeordnet ist. Die Schnecke 22 greift in die Verzahnung 30 des Getrieberads 3 ein, welches als Schneckenrad ausgebildet ist. Das Getrieberad 3 ist in einem Lager 23 in dem Getriebegehäuse 25 um die Spindelachse S drehbar gelagert. Die Rotationsachse der Schnecke 22 und die Spindelachse S des Getrieberads 3 stehen senkrecht aufeinander, wie es von Schneckengetrieben an sich bekannt ist.

Entsprechend kann durch eine Rotation der Abtriebswelle 24 des Antriebsmotors 20 das Getrieberad 3 rotiert werden, wodurch eine Längsverstellung der Stelleinheit 16 in Längsrichtung L gegenüber der Manteleinheit 104 und damit eine Längsverschiebung der Stelleinheit 16 gegenüber der Trageinheit 10 stattfindet.

Figur 2 zeigt eine auseinander gezogene Darstellung des Verstellantriebs 2. Deutlich erkennbar ist die Gewindespindel 4, an deren einen Ende das Koppelelement 6 fest angebracht ist. Am anderen Ende ist ein aus Kunststoff gebildetes Anschlagelement 7 fest auf der Gewindespindel 4 angebracht, wobei das Anschlagelement 7 durch partielle plastische Deformationen in Form von Einformungen 71 die mittels Heiß- bzw. Warmverstemmen eingebracht sind, auf der Gewindespindel 4 fixiert ist. Alternativ kann das Anschlagelement 7 auch aus einem metallischen Werkstoff gebildet sein, welches durch partielle plastische Deformationen auf der Gewindespindel fixiert ist.

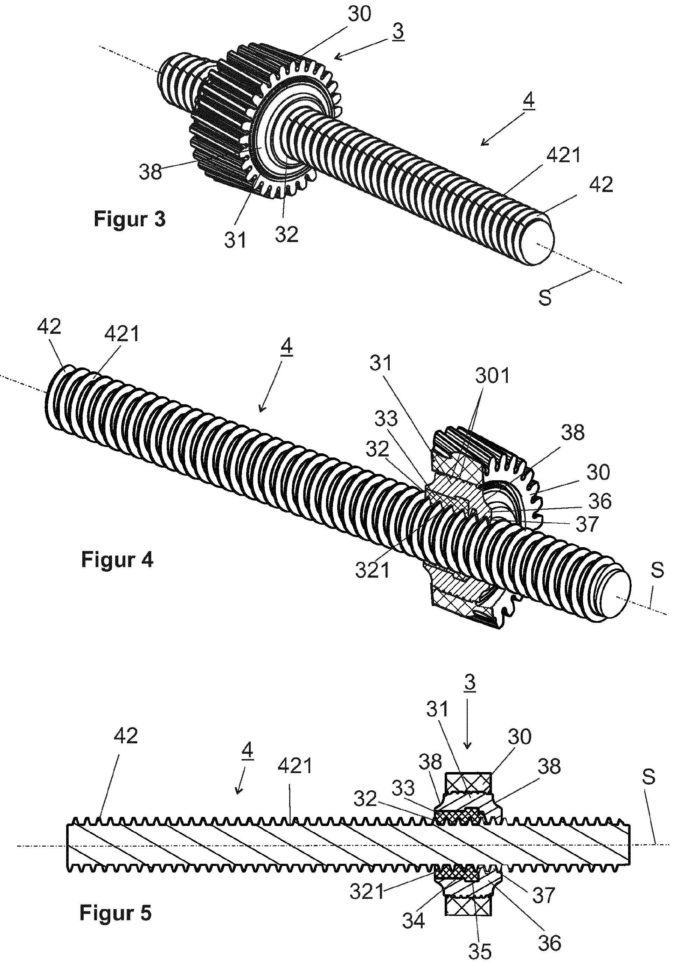

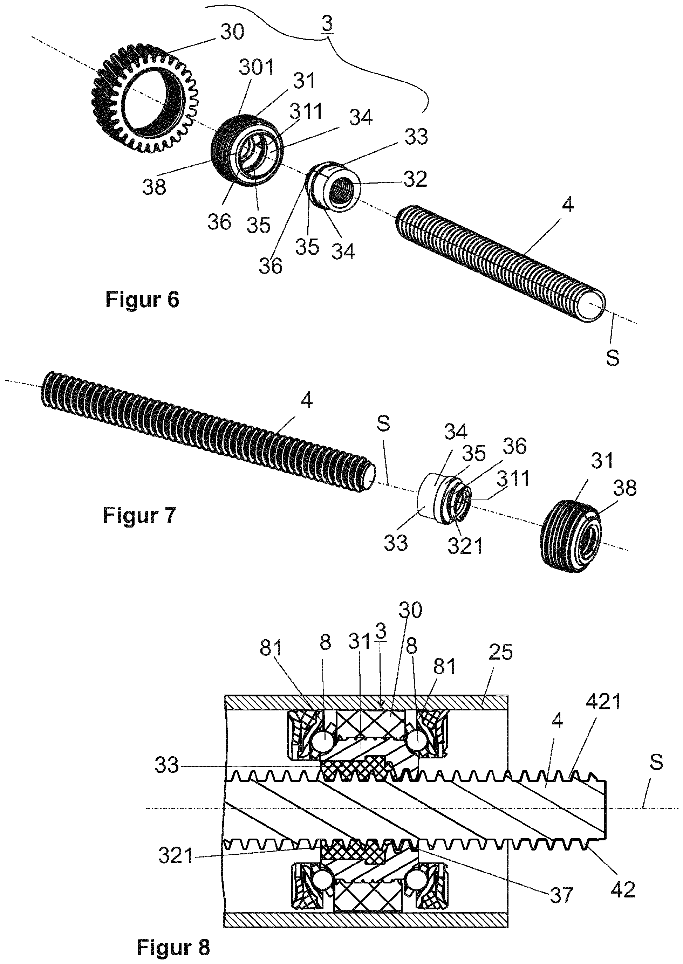

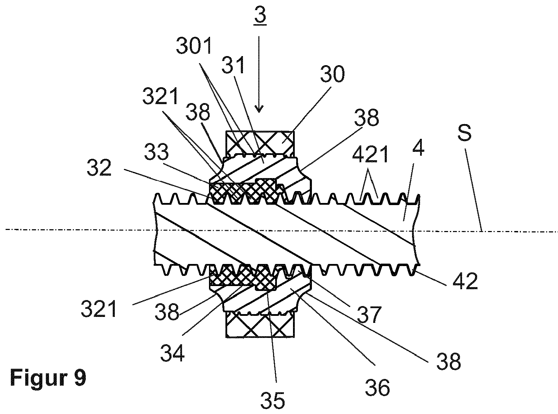

Figuren 3, 4 und 5 zeigen den aus dem Getrieberad 3 und der darin eingreifenden Gewindespindel 4 gebildeten Spindeltrieb eines Verstellantriebs 2, wie beispielsweise in Figur 1 und 2 dargestellt. Figur 9 zeigt einen vergrößerten Ausschnitt des Längsschnitts entlang der Spindelachse S von Figur 5 durch das Getrieberad 3. In Figur 6 und Figur 7 ist das Getrieberad 3 schematisch auseinander gezogen dargestellt.

In den Schnittdarstellungen von Figuren 4, 5 und 9 ist erkennbar, dass das Getrieberad 3 ein Kernelement 31 aufweist, welches bevorzugt aus Stahl besteht. Ein Innengewinde 32 ist in einem Gewindeelement 33 ausgebildet, welches koaxial in einer axialen Durchgangsöffnung 311 des Kernelements 31 fixiert ist. Das Gewindeelement 33 besteht aus einem thermoplastischen Kunststoff und ist in das Kernelement 31 in einem Kunststoff-Spritzgießverfahren eingespritzt.

Das Innengewinde 32 ist im Beispiel als eingängiges Gewinde ausgebildet und weist daher einen schraubenförmig umlaufenden Gewindezahn 321 auf, der in eine umlaufende Gewindelücke 421 des Außengewindes 42 der Gewindespindel 4 eingreift.

Die Verzahnung wird im Beispiel durch einen Zahnkranz 30 aus thermoplastischem Kunststoff gebildet, der in einem Kunststoff-Spritzgießverfahren außen an dem Kernelement 31 angespritzt ist. Zur Erzeugung einer besonders belastbaren Formschlussverbindung weist das Kernelement 31 auf seinem äußeren Umfang Formschlusselemente 301 in Form von Nuten oder Vorsprüngen auf, die in den Kunststoff des Zahnkranzes 30 eingebettet sind.

In der Durchgangsöffnung 311 weist das Kernelement 31 einen Positionierabschnitt 34 auf, in dem die Innenwandung innen zylindrisch und glatt ausgebildet ist. Der Innendurchmesser der Durchgangsöffnung 311, der dem Außendurchmesser des Gewindeelements 33 entspricht, ist im Positionierabschnitt 34 größer als der Außendurchmesser des Innengewindes 32. Der in den Positionierabschnitt 34 eingespritzte Kunststoff haftet stoffschlüssig an der zylindrischen Innenwandung, wobei durch die glatte Innenwandung und die rotationssymmetrische Ausrichtung zum Innengewinde 32 die Maßhaltigkeit des Gewindezahns 321 gewährleistet ist.

An den Positionierabschnitt 34 grenzt in axialer Richtung - in den Figuren 4, 5 und 9 rechts - ein Verbindungsabschnitt 35 an. Der Verbindungsabschnitt 35 weist eine in der Durchgangsöffnung 311 radial von innen eingeformte nutartige Vertiefung auf, die einen relativ zum Positionierabschnitt 34 vergrößerten Innendurchmesser hat, und dadurch hinterschnitten ausgebildet ist. Entsprechend bewirkt der Kunststoff in dem Verbindungsabschnitt 35 eine in axialer Richtung formschlüssige, unlösbare Fixierung des Gewindeelements 33 in dem Kernelement 31. Die Innenwandung in dem Verbindungsabschnitt 35 kann ebenfalls in Umfangsrichtung glatt und zylinderförmig umlaufend ausgebildet sein, um potentiell nachteiligen Einfall und Verspannungen beim Erstarren des Kunststoffs zu vermeiden.

Weiterhin weist das Kernelement 31 einen Crashabstützungsabschnitt 36 auf, in dem ein einstückig angeformtes Abstützungselement 37 radial nach innen bis in den Gewindezahn 321 vorsteht. Das Abstützungselement 37 ist mit der Steigung des Gewindes 32 schraubenförmig umlaufend ausgebildet, und bildet einen - in den Figuren nach rechts - konisch nach innen zusammenlaufenden Gewindevorsprung. Es ist deutlich erkennbar, dass das Abstützungselement 37 in die umlaufende Gewindelücke 421 der Gewindespindel 42 radial eintaucht. Dadurch bildet es einen in axialer Richtung wirksamen Formschluss, auch wenn durch extrem hohe Belastung, wie sie im Crashfall auftreten kann, der im Positionierabschnitt 34 vollständig aus Kunststoff ausgebildete Gewindezahn 321 verformt oder abgeschert wird. Zumindest teilweise - bevorzugt an den Gewindeflanken ist der Gewindezahn 321 auch im Crashabstützungsabschnitt 36 mit Kunststoff umspritzt, wie in den Figuren 8 und 9 erkennbar.

Im Crashabstützungsabschnitt 36 kann das Innengewinde 32 einen relativ zum Positionierabschnitt 34 größeren Innendurchmesser haben, so dass dort im Gewinde zwischen der Gewindespindel 4 und dem Innengewinde 32 ein größeres radiales Spiel besteht.

Wie dargestellt, kann der Verbindungsabschnitt 35 bevorzugt zwischen dem Positionierabschnitt 34 und dem Crashabstützungsabschnitt 36 angeordnet sein.

Figur 6 zeigt eine schematische auseinandergezogene Darstellung der einzelnen Elemente des Getrieberads 3, die normalerweise unlösbar miteinander verbunden sind. Dabei sind der Positionierabschnitt 34, der Verbindungsabschnitt 35 und der Crashabstützungsabschnitt 36 zur Verdeutlichung an dem Gewindeelement 33 und an dem Kernelement 31 korrespondierend bezeichnet. Figur 7 zeigt eine weitere schematische auseinandergezogene Darstellung der einzelnen Elemente - allerdings ohne Zahnkranz - insbesondere des Gewindeelements 33. Darin ist zu entnehmen, dass nicht nur das Innengewinde 32 einen Gewindezahn 321 aufweist, sondern dass ein oder mehrere Gewindegänge aus Kunststoff im Bereich des Abstützungselements 37 außen auf dem Crashabstützungsabschnitt 36 ausgebildet sind.

Auf beiden axialen Stirnseiten sind in dem Kernelement 31 umlaufende Lagerringe 38 ausgebildet, welche einstückig eingeformte Laufbahnen für Wälzkörper bilden, beispielsweise Kugeln 8. In einer Lageranordnung, wie in Figur 8 dargestellt, sind den Lagerringen 38 schräg gegenüberliegend korrespondierende Lagerringe 81 zur Bildung von Schräg-Drucklagern im Getriebegehäuse 25 fixiert. Zwischen den aus den Lagerringen 38 und 81 zusammen mit den Kugeln 8 gebildeten Kugellagern ist das Getrieberad 3 beidseitig wälzgelagert.

### Bezugszeichenliste

- 1: Lenksäule
- 10: Trageinheit
- 12: Mantelrohr
- 14: Lenkspindel
- 141: lenkradseitiges Ende
- 16: Stelleinheit
- 18: Verschwenkmechanismus
- 100: Konsole
- 102: Befestigungsbohrung
- 104: Manteleinheit
- 106: Schwenkachse
- 107: Befestigungselement
- 110: Schlitz
- 120: Anlenkhebel
- 181: Stellhebel
- 182: Gelenk
- 183: Gelenkachse
- 184: Gelenkachse
- 2, 2': Verstellantrieb
- 20,20': Antriebsmotor
- 22: Schnecke
- 23: Lager
- 24: Abtriebswelle
- 25: Getriebegehäuse
- 3: Getrieberad
- 30: Verzahnung
- 31: Kernelement
- 311: Durchgangsöffnung
- 32: Innengewinde
- 321: Gewindezahn
- 33: Gewindeelement
- 34: Positionierabschnitt
- 35: Verbindungsabschnitt
- 36: Crashabstützungsabschnitt
- 37: Abstützungselement
- 38: Lagerring
- 4, 4': Gewindespindel
- 42: Außengewinde
- 421: Gewindelücke
- 43: Gelenkkopf
- 7: Anschlagelement
- 71: Einformungen
- 8: Kugel
- 81: Lagerring

## Patentansprüche

1. Getrieberad für einen Verstellantrieb (2), welches einen Zahnkranz (30) aufweist, der außen koaxial umlaufend an einem Kernelement (31) angebracht ist, welches eine axiale Durchgangsöffnung (311) aufweist, in der ein Gewindeelement (33) angebracht ist, das aus einem Kunststoff als Kunststoff-Spritzgussteil ausgebildet ist und das ein axial durchgehendes Innengewinde (32) mit mindestens einem schraubenförmig umlaufenden Gewindezahn (321) aufweist,
**dadurch gekennzeichnet,**
**dass** das Gewindeelement (33) an einer Innenwandung der Durchgangsöffnung (311) an das Kernelement (31) angespritzt ist, das aus einem metallischen Werkstoff besteht, wobei in der Durchgangsöffnung (311) ein Crashabstützungsabschnitt (36) ausgebildet ist, in dem mindestens ein Stützelement (37) von dem Kernelement (31) in einen Gewindezahn (321) vorsteht, der zumindest teilweise mit dem Kunststoff überzogen oder von dem Kunststoff umschlossen ist.

2. Getrieberad nach Anspruch 1, **dadurch gekennzeichnet, dass** die Durchgangsöffnung (311) mindestens einen glatten, zylindrischen Positionierabschnitt (34) aufweist.

3. Getrieberad nach Anspruch 1 oder 2, **dadurch gekennzeichnet, dass** in der Durchgangsöffnung (311) ein hinterschnittener Verbindungsabschnitt (35) ausgebildet ist.

4. Getrieberad nach den Anspruch 1, **dadurch gekennzeichnet, dass** der Crashabstützungsabschnitt (36) in einem Endbereich der Durchgangsöffnung (311) angeordnet ist, und der Positionierabschnitt (34) in dem anderen, dazu entgegengesetzten Endbereich.

5. Getrieberad nach den Ansprüchen 1 bis 4, **dadurch gekennzeichnet, dass** ein Verbindungsabschnitt (35) zwischen dem Positionierabschnitt (34) und dem Crashabstützungsabschnitt (36) angeordnet ist.

6. Getrieberad nach Anspruch 1, **dadurch gekennzeichnet, dass** zumindest in einem Teil des Crashabstützungsabschnitts (36) das Innengewinde (32) einen vergrößerten Kerndurchmesser aufweist.

7. Getrieberad nach einem der vorangehenden Ansprüche, **dadurch gekennzeichnet, dass** der Zahnkranz (30) aus einem Kunststoff als Kunststoff-Spritzgussteil außen an dem Kernelement (31) angespritzt ist.

8. Getrieberad nach einem der vorangehenden Ansprüche, **dadurch gekennzeichnet, dass** das Kernelement (31) eingeformte Lagerringe (38) aufweist.

9. Verstellantrieb (2) für eine motorisch verstellbare Lenksäule (1) für ein Kraftfahrzeug, umfassend ein Getrieberad (3), eine in ein Innengewinde (32) des Getrieberades (3) eingreifende Gewindespindel (4) und eine Antriebseinheit (20), von der das Getrieberad (3) relativ zur Gewindespindel (4) drehend antreibbar ist, **gekennzeichnet dadurch, dass** das Getrieberad (3) gemäß einem der Ansprüche 1 bis 8 ausgebildet ist.

10. Motorisch verstellbare Lenksäule (1) für ein Kraftfahrzeug, umfassend einen Verstellantrieb (2), der zwischen einer mit der Karosserie verbindbaren Trageinheit (10) und einer eine Lenkspindel (14) drehbar aufnehmenden Manteleinheit (104) und/oder zwischen axial relativ zueinander teleskopartig verstellbaren, die Lenkspindel () lagernden Mantelrohren (12) einer Manteleinheit (104) angeordnet ist.
**dadurch gekennzeichnet,**
**dass** der Verstellantrieb (2) ausgebildet ist gemäß Anspruch 9.

## Claims

1. A gear wheel for an adjustment drive mechanism (2) which has a ring gear (30) which is attached coaxially circumferentially to the outside of a core element (31), which has an axial passage opening (311), in which a threaded element (33) is fitted, the latter being formed from a plastic as an injection molded plastic part and having an axially continuous internal thread (32) having at least one thread tooth (321) running around helically,
**characterized in that,**
the threaded element (33) is molded onto the core element (31) on an inner wall of the passage opening (311), which consists of a metal material, wherein a crash support portion (36) is configured in the passage opening (311), at least one support element (37) protruding from the core element (31) into a thread tooth (321) in said crash support portion (36), which is at least partially coated with the plastic or is enclosed by the plastic.

2. The gear wheel as claimed in claim 1, **characterized in that** the passage opening (311) has at least one smooth, cylindrical positioning portion (34).

3. The gear wheel as claimed in claim 1 or 2, **characterized in that** an undercut connecting portion (35) is configured in the passage opening (311).

4. The gear wheel as claimed in claim 1, **characterized in that** the crash support portion (36) is arranged in an end region of the passage opening (311) and the positioning portion (34) is arranged in the other end region opposite thereto.

5. The gear wheel as claimed in claims 1 to 4, **characterized in that** a connecting portion (35) is arranged between the positioning portion (34) and the crash support portion (36).

6. The gear wheel as claimed in claim 1, **characterized in that** the internal thread (32) has a larger core diameter at least in one part of the crash support portion (36).

7. The gear wheel as claimed in one of the preceding claims, **characterized in that** the ring gear (30) is molded externally onto the core element (31) from a plastic as an injection molded plastic part.

8. The gear wheel as claimed in one of the preceding claims, **characterized in that** the core element (31) has integral bearing rings (38).

9. An adjustment drive mechanism (2) for a motor-adjustable steering column (1) for a motor vehicle, comprising a gear wheel (3), a threaded spindle (4) engaging in an internal thread (32) of the gear wheel (3) and a drive unit (20) by which the gear wheel (3) is rotatably drivable relative to the threaded spindle (4), **characterized in that** the gear wheel (3) is configured as claimed in one of claims 1 to 8.

10. A motor-adjustable steering column (1) for a motor vehicle, comprising an adjustment drive mechanism (2) which is arranged between a support unit (10) which may be connected to the vehicle body and a casing unit (104) rotatably receiving a steering spindle (14) and/or between casing tubes (12) of a casing unit (104) which are axially adjustable in a telescopic manner relative to one another and which bear the steering spindle (), **characterized in that** the adjustment drive mechanism (2) is configured as claimed in claim 9.

## Revendications

1. Roue d'engrenage pour un entraînement de réglage (2), qui présente une couronne dentée (30) qui est montée extérieurement de manière coaxialement périphérique sur un élément central (31) qui présente une ouverture de passage axiale (311) dans laquelle est monté un élément fileté (33) qui est réalisé dans une matière plastique sous la forme d'un pièce moulée par injection de matière plastique et qui présente un taraudage axialement continu (32) pourvu d'au moins une dent de filetage (321) périphérique de manière hélicoïdale,
**caractérisée en ce que** l'élément fileté (33) est au niveau d'une paroi intérieure de l'ouverture de passage (311) surmoulé sur l'élément central (31) qui est composé d'un matériau métallique, dans laquelle, dans l'ouverture de passage (311), une section de support anticollision (36) est réalisée dans laquelle au moins un élément de support (37) fait saillie à partir de l'élément central (31) dans une dent de filetage (321) qui est au moins partiellement recouverte de matière plastique ou entourée de la matière plastique.

2. Roue d'engrenage selon la revendication 1, **caractérisée en ce que** l'ouverture de passage (311) présente au moins une section de positionnement cylindrique lisse (34).

3. Roue d'engrenage selon la revendication 1 ou 2, **caractérisée en ce que** dans l'ouverture de passage (311), une section de liaison contre-dépouillée (35) est réalisée.

4. Roue d'engrenage selon la revendication 1, **caractérisée en ce que** la section de support anticollision (36) est disposée dans une zone d'extrémité de l'ouverture de passage (311), et la section de positionnement (34) est disposée dans l'autre zone d'extrémité opposée.

5. Roue d'engrenage selon l'une quelconque des revendications 1 à 4, **caractérisée en ce qu'**une section de liaison (35) est disposée entre la section de positionnement (34) et la section de support anticollision (36).

6. Roue d'engrenage selon la revendication 1, **caractérisée en ce que** le taraudage (32) présente un diamètre central agrandi au moins dans une partie de la section de support anticollision (36).

7. Roue d'engrenage selon l'une quelconque des revendications précédentes, **caractérisée en ce que** la couronne dentée (30) en matière plastique est surmoulée à l'extérieur sur l'élément central (31) sous la forme d'une pièce moulée par injection de matière plastique.

8. Roue d'engrenage selon l'une quelconque des revendications précédentes, **caractérisée en ce que** l'élément central (31) présente des bagues de roulement (38) moulées.

9. Entraînement de réglage (2) pour une colonne de direction (1) réglable par moteur pour un véhicule automobile, comprenant une roue d'engrenage (3), une broche filetée (4) venant en prise avec un taraudage (32) de la roue d'engrenage (3) et une unité d'entraînement (20) qui peut entraîner en rotation la roue d'engrenage (3) par rapport à la broche filetée (4), **caractérisé en ce que** la roue d'engrenage (3) est réalisée selon l'une quelconque des revendications 1 à 8 .

10. Colonne de direction (1) réglable par moteur pour un véhicule automobile, comprenant un entraînement de réglage (2) qui est disposé entre une unité porteuse (10) pouvant être reliée à la carrosserie et une unité de protection (104) recevant en rotation l'arbre de direction (14) et/ou entre des tubes de protection (12) d'une unité de gaine (104), réglables axialement de manière télescopique les uns par rapport aux autres et logeant l'arbre de direction (), **caractérisée en ce que** l'entraînement de réglage (2) est réalisé selon la revendication 9.
